Europäisches Patentamt

European Patent Office

Office européen des brevets

(11) Publication number: **0 152 271**

**A2**

(12) **EUROPEAN PATENT APPLICATION**

(21) Application number: **85300787.0**

(22) Date of filing: **06.02.85**

(51) Int. Cl.⁴: **B 65 G 47/71**
**B 65 G 47/44, A 21 C 15/00**

(30) Priority: **09.02.84 GB 8403411**

(43) Date of publication of application:
**21.08.85 Bulletin 85/34**

(84) Designated Contracting States:
**AT BE CH DE FR GB IT LI LU NL SE**

(71) Applicant: **Conway Engineering Company Limited**
**Springfield Road**
**Hayes, Middlesex(GB)**

(72) Inventor: **Charlton, Douglas c/o Conway Engineering Co.**
**Ltd.**
**Springfield Road**
**Hayes Middlesey(GB)**

(74) Representative: **Clifford, Frederick Alan**
**MARKS & CLERK 57/60 Lincoln's Inn Fields**
**London WC2A 3LS(GB)**

(54) **Improvements in conveyor systems.**

(57) A diverter 5 for a conveyor installation (1, 2, 7), especially suitable for articles with a deformable undersurface, such as freshly baked bread 4, is in the form of a slide 15 with a first set of narrow parallel slide rails 18, (usually four) with coplanar upper edges and a second such set, at an acute diversion angle thereto, movable to present its slide rails 19 above the plane of the upper edges of the first set so as to intercept a desired article 4 or sequence of articles e.g. for diversion to a slice-and-wrap machine.

Surprisingly, the subsequent orientation of the articles 4 is unchanged whichever set of slide rails is used, so that for example loaves of bread 4 are presented to either of two diverted paths 2, 7 without alteration of orientation so as to facilitate subsequent treatment.

FIG. 2a.

FIG. 2b.

1

**0152271**

Title:"Improvements in Conveyor Systems"

This invention relates to conveyor systems for conveying a succession of articles spaced apart. More especially this invention relates to a slide for selective diversion of one or more such article, especially for selective diversion of a type such as to preserve the same orientation of the article relative to the diverted path as to the original path.

The invention has numerous applications, as discussed in more detail below, to the handling of spaced conveyed articles, but is especially useful for those articles of light weight and fairly soft surface, more especially where it is desired to preserve at least approximately a desired relative orientation after diversion from an original path. For convenience, the invention will be primarily discussed with reference to bakery installations.

In bakery installations, spaced loaves of baked bread lie with long axes across their path of travel and are subject to further processing, such as slicing or wrapping, by equipment which may not be fast enough to cope with the spaced supply whereby periodic diversion of groups of loaves into one or other of two or more such units is necessary.

Baked loaves of commercially produced bread are warm, lightweight, soft and resilient to the grasp, and have baked undersurface which is moderately hard but still somewhat deformable, i.e. more so than the crisp top surface. They should be dealt with manually as little as possible for cost and hygiene reasons. Typically, they are conveyed from place to place along stainless steel channels with a number (usually 4) of driven parallel cords or chains of polymeric material running along the base e.g. in suitable restraining grooves. Such channels can be straight or can be quadrant shaped. In either instance the loaves lie across the cords and are spaced from the base so that cooling is not hindered or the crust character is not changed e.g. by trapped vapour. The quadrant-shaped channels have a drive for the cords which ensures that the cords travel at different relative speeds and thereby ensures that the loaf arrives at the outlet still at right angles to all of the cords for onward passage e.g. to a slice and wrap machine.

Typically the continuous oven is a high throughput installation which produces baked loaves at such a rate that a single slice and wrap machine cannot cope. It is therefore necessary selectively to feed several such machines from one oven.

Often this is done manually, an operator picking up by heat resistant gloves a number of loaves and placing them on the feed inlet path of a slice and wrap machine with the long axes turned transverse to their new path. This way he can ensure that more than one machine is fully in use.

This task is boring, uncomfortable, and unduly expensive to the bakery; also manual handling of warm unwrapped food is hygienically undesirable.

Mere mechanisation of grasping and turning arms is not practical, since sometimes the sequence of arriving loaves is interrupted, and sometimes the same oven is operated to make loaves of different sizes. In such cases, a human operator can immediately see the changes and adjust, but the control and feedback necessary to give grasping and turning arms this facility, so as to avoid damage to the loaves, would be unduly expensive in its context.

Attention has therefore been directed to periodic diversion of a group of loaves into different paths, each containing a separate slicing and wrapping machine. Transfer through the equiment, however, is as described above, usually effected by driven parallel support cords and chains. Diversion and from and to such paths using such equipment is difficult. Proposals have been made which involve disengaging and re-engaging of cords with an alternative set of driving wheels in a different path, but these are very complex and expensive.

We have accordingly investigated a different type of path-diversion equipment depending for its action on the article sliding by gravity from a higher to a selectable lower position.

If a warm loaf of bread is placed on an inclined smooth surface, it will slide down by the shortest path. If, initially, the loaf is placed with its long axis at right angles to this path then, in theory, it will arrive at the bottom with the same orientation. In practice, in a bakery the surface is never quite smooth (or becomes differentially filmed or roughened over a period of time) and the underside of the bread is never quite flat; the loaf therefore twists as it slides down and arrives at the bottom in a different orientation. Small differences do not matter, but large differences go beyond the readjustment capability of subsequent equipment such as the slice and wrap machine, and thereby give rise to malfunction.

This problem cannot in practice be cured by side restraints for the sliding loaves, since any pair of such restraints only helps for loaves of a predetermined size. For smaller loaves such restraints actually promote twisting, leading to the jamming of the slide or randomly mis-oriented arrivals at the bottom.

One known expedient to prevent twisting on a slide (e.g. on the slide leading directly to the slice and wrap machine inlet) is to provide parallel longitudinal slide ribs as more or less continuations of driven cords of the conveyor feeding the slide. These ribs are formed by rolling in the stainless steel base and typically present themselves within the slide as $90^{o}$ inverted-V ribs rounded at the apex. Loaves slide down these ribs with less contact and therefore (a) less tendency to be differentially hindered by chance roughnesses or filming and also (b) less chance of an effective "pivot" point or twisting being constituted.

Our invention is based upon the surprising observation that if the outlet of such a straight slide is displaced laterally it is possible in some circumstances for loaves to still to slide down the ribs without contact with any side channel walls. The expectation, because the slide does not follow the shortest route down its notional slope was that the loaves would slip towards one slide edge (as defined in practice by a restraining wall) and then slide down in contact with that edge. Our observation was that, in certain circumstances, the loaves tended to stay on the rails; that is to say the rails not only restrained against twisting but also tended to restrain against the normal tendency to follow the "shortest route"

In one aspect the invention provides a method of materials handling in which one or more members of a spaced succession of unit articles travelling in a predetermined path is selectively diverted from the path to a second path by placing in, and at an acute angle to the said predetermined path the upper end of a slide member comprising a plurality of straight parallel support rails all terminating in a common support and slide plane,whereby diverted articles slide down the support rails while maintaining their relative orientation thereto.

Usually, the predetermined path will travel straight on: then the diverted articles will move in a path at an acute angle to this straight path.

The predetermined path itself preferably slopes down as a slide path, although a drive path, with articles supported on spaced parallel support cords or chains can also be envisaged.

Preferably, the method envisages diversion from one slide path utilising parallel support rails with coplanar upper edges to another such rail-defined path extending both down and across the slope. Surprisingly, articles both stay on the rails and stay in the same orientation.

In another aspect, the invention provides a diverter for a conveyor installation comprising: a first set of parallel support means normally occupying a path of travel for a succession of spaced unit articles; a set of straight parallel support rails all terminating at thin upper edges in a common support plane; and means to place the set of rails into the path of travel in place of the parallel support means while the set of rails are inclined as a slide.

Preferably, and in the form of particular value for bakery installations, the invention comprises: a first set of inclined parallel support rails all terminating at thin upper edges in a common support plane; and a second set of such rails, at an acute angle to the first set, capable of being selectively brought into intersection therewith, and with the coplanar thin rail edges above those of the first set, so as to present an alternative diverted slide path for articles such as loaves of bread supported thereon.

In a preferred embodiment, the first set of rails are lower and extend at an angle from the preceding portion of a travel path; and the second set are higher and continue the direction of the said preceding portion.

The second set of rails can be mounted for joint pivotal movement into the selective intersecting position, the rails being individually provided with spaced gaps to accommodate the intersecting rails of the first set.

For a diverter unit in a baked loaf conveyor system, the width of individual rails is usually from 0.8 to 6mm (1/16th to 1/4 inch). There are preferably four rails in eachset (although two, or three, is also possible). The angle of diversion may be up to $45^{\circ}$ but is preferably $10^{\circ}-30^{\circ}$; the angle of slide travel is preferably $5^{\circ}-15^{\circ}$ e.g. $8^{\circ} - 12^{\circ}$.

The invention will be further described with reference to the accompanying drawings in which:-

Figures 1a and 1b show diagrammatically a plan and an elevation of part of a bakery handling line for baked loaves of bread, incorporating two slide diverter units;

Figures 2a and 2b show diagrammatically a diverter of the type used in the handling line shown in Figures 1a and 1b;

Figure 3 is a geometrical diagram assisting in the definition of certain operational parameters;

Figure 4 shows details of the intersection region of rails shown in Figures 2a and 2b;

Figure 5 shows details of an alternative rail intersection;

Figure 6a, 6b and 6c show details of rail shape and intersections;

Figures 7a to 7e are diagrams which show details relevant to the believed mode of operation of the diverter; and

Figures 8a to 8e show other possible configurations of equipment.

Figure 9 shows diagrammatically a further embodiment of diverter utilising a simplified table construction and support units of channel cross-section.

Figure 10 shows a detail of Figure 9.

Figure 11 shows an improved offtake arrangement for the slide member.

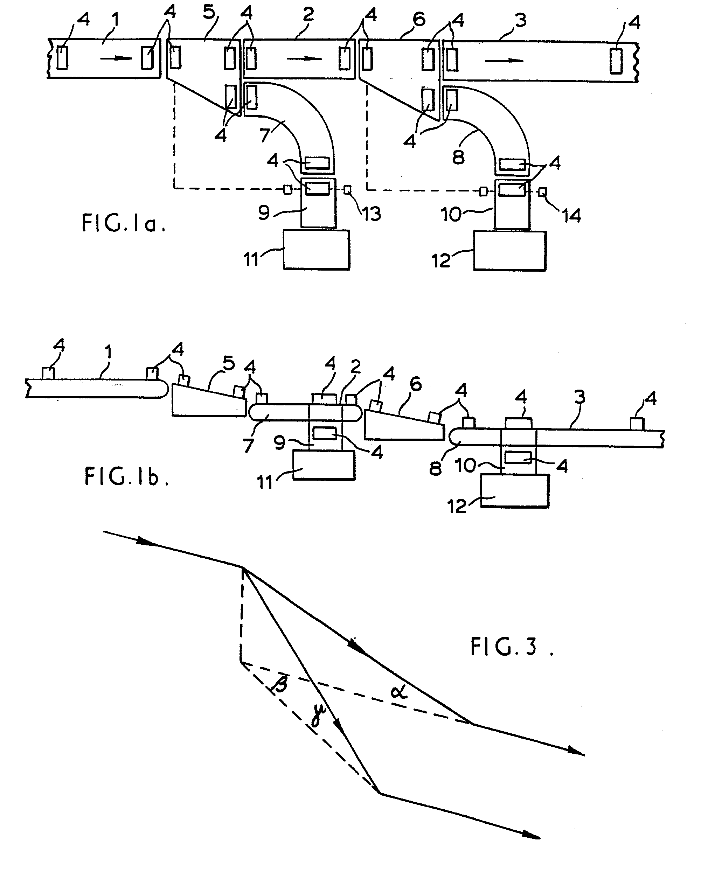

Figure 1a and 1b show by way of example only a conveyor installation as part of a bakery transfer line for the baked loaves, and including a slide diverter, in accordance with one possible embodiment of the present invention.

The installation of Figures la and lb comprises three conventional straight conveyors 1, 2 and 3, each formed with four driven parallel polymer support cords (not shown for clarity of illustration) by means of which loaves 4 of varying sizes can be conveyed in the direction of the arrows with their axes transverse to the path of travel, being supported on two, three or four of such cords.

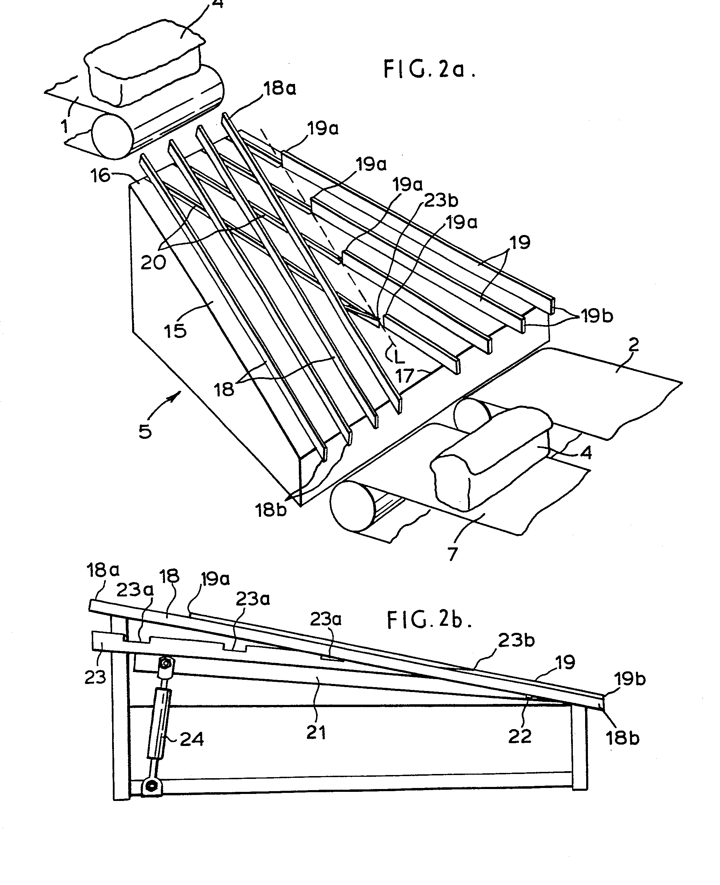

These straight conveyors are separated by slide diverters 5 and 6, shown in more detail in Figures 2a and 2b. By selective adjustment of these diverters, as described below, loaves 4 slide to one of two positions at the foot of the slide, one position feeding the next straight conveyor 2 or 3 respectively and the other position feeding quandrant conveyors 7 or 8 respectively. Transfer on and off such conveyors is by means of gentle tilting under gravity, with as little disturbance as possible.

The quadrant conveyors 7, 8 are well known per se. They also possess four support cords (not shown) constrained by grooves in the base to travel in the direction of the arrows along circular arcs, with the outer arcs moving faster than the inner. On such cords the bread remains with its axis radial, that is to say, arrives at the outlet in the transverse orientation as before. At this point each loaf again tilts gently, by gravity, on to longitudinally ribbed slides 9, 10 respectively from which the loaf passes into a known slice-and-wrap machine 11, 12 respectively.

Figure 1b shows typical differences in level in the various unit portions of the installation.

Slide diverters 5 and 6 are operated (in the embodiments shown) by demand at the slice and wrap machines. Loaves are supplied until a backup of loaves on slide 9 or 10 is detected by a photocell source and receptor 13 or 14. Each such photocell control operates the selective positions of the slide diverter, e.g. so as to allow more loaves to reach the quadrants 7 and slide 9 (or quadrant 8 and slide 10) when necessary. The exact nature of the controls i.e. whether a delay circuit, fail-safe, or secondary photo cell is utilised is a matter of choice for the particular conveyor line and is not a major feature of the present invention.

Figure 2a shows with rather exaggerated proportions a general view of one possible embodiment of slide diverter 5 in more detail. It comprises a table portion 14 trapezoidal in plan and inclining downwardly from its narrow upper end 16 to its wider lower end 17. To the able is welded a first set of four thin parallel rails 18 with their top surfaces coplanar at a common height above the table surface. These rails extend at their upper ends 18a just over the upper table end 16 and at their lower end 18b to just beyond the lower table end 17, at positions which are divergent to one side from the "shortest route" down the slope of the table. Also welded to the table is a second set of four thin parallel rails 19 which occupy the "shortest route"direction down the table. Rails 19 extend to a greater common coplanar height above the table than rails 18. Rails 19, however have their respective upper end 19a at different distances along their lengths.

These ends 19a all lie along a line L spaced from and parallel to the nearest rail 18. Lower ends 19b extend just beyond the lower table end 17 to the same extent as rail ends 18b.

The table surface 15 possesses four slots 20, each in a continuation of the direction of a rail of set 19, passing beneath the rails of set 18, and being slightly wider than the rails 19.

Beneath the table surface there is a frame 21 hinged at 22 and carrying four rails 23 (only one being visible). These rails 23 resemble rails 19, and vary in length in a manner corresponding to the lengths of slots 20. The frame 21 is supported on a pneumatic piston/cylinder 24.

Operation of the cylinder 24 upwards tilts the frame upward and presents rails 23 through the slots 20 as continuations of rails 19. Rails 23 are recessed at 23a to accommodate the intersections with rails 18 in this raised position. In the raised position, rails 23/19 extend with their coplanar top surfaces higher than those of rails 18, and thus engage the undersurface of loaf 4 arriving from conveyor 1 whereby the loaf slides down the rails (the recesses 23a not being such as to affect this straight sliding travel) with unchanged orientation to arrive at conveyor 2 for onward travel.

Operation of the cylinder downwards retracts rails 23, at least to an extent where they are inoperative, even if small projections e.g. at 23b are still visible. Arriving loaves 4 thus land on rails 18 and slide down these rails with unchanged orientation to arrive at conveyor 7 for onward travel to the slice and wrap machine 11. Rails 19 are sufficiently spaced from rails 18 (because they all end at notional line L) not to intefere with this sliding movement. Thus, surprisingly, a "not-shortest-path" slide diversion is attained without side wall restraints and with a maintenance of desired article orientation, using simple and robust equipment.

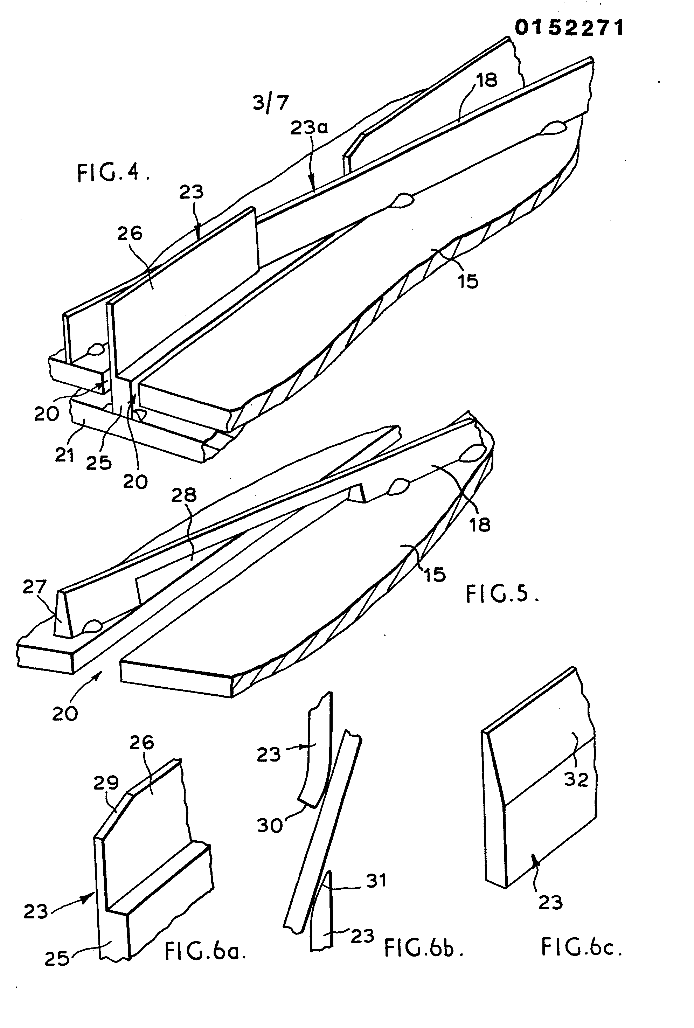

Figure 3 is a geometrical diagram illustrating the paths of travel shown in Figure 2. For convenience of terminology  angle $\alpha$ is herein called "angle of slope"; angle ß is the "angle of diversion; and $\rho$ the "angle of travel". In the embodiment shown the "angle of travel" for one mode of use is of course the same as the "angle of slope" (i.e. the "shortest route") but it is possible to operate with routes at different "angles of travel" none of which correspond to the "angle of slope".

In the diagram shown, $\rho$ is related to $\alpha$  and $\beta$  by the relationship

$$\tan \rho = \tan \alpha \ \cos \beta \ .$$

While, as discussed more fully below, numerous modifications of proportion and detail may be made, the following details related to Figure 2a and 2b and given by way of example only have been found preferable in the handling of a range of sizes of loaves of commercially produced bread, warm from the ovens:

Length of diverter-                    3 feet 914m

$\alpha$                                    $12^{\circ}$

$\beta$                                    $20^{\circ}$

$\rho$                                    $11.3^{\circ}$

Rails 18 - four rails, 0.5 inch (12-13mm) projections and 1/16 inch (1.6mm) effective contact width.

Rails 19/23 - four rails, 0.75 inch (19mm) projection and 1/16 inch (1.6mm) effective contact width.

Material - polished stainless steel.

The equipment shown in Figure 2a can be modified by possessing more, or fewer, rails, although four is the optimum. Rails 23 could pass through interruptions in rails 18, but it is preferable to keep any interruptions in the rails defining the "shortest path" route. Longer slides could readily be used, and experiments have shown that loaves are kept reliably in their desired orientation, even in a "non-shortest route" path, for distances of at least four metres. Other values for $\alpha$ and $\beta$ are readily obtainable, although for bread we have found that if ß is preferably not more than $45^{\circ}$ and $\alpha$ is preferably such that any angle $\mu$ is not less than $5^{\circ}$ (since travel is slow and unreliable) or more than $15^{\circ}$ (since travel is too fast and may lead to loaves becoming dislodged). The range of values from $8^{\circ}$ to $12^{\circ}$ is preferable for angle $\alpha$ .

The rails 23 are shown as mounted on a frame tiltable upwards; rails 23 mounted on a frame that moves upwardly at right angles to the surface 15 are also possible but do not usually justify the extra expense.

Table 15 itself, while preferred for safety, hygiene and appearance, can be dispensed with provided that the rails are rigidly supported on suitable open frames.

The rails themselves are preferably thin without being sharp as discussed in more detail below. The example given appears optimum for bread; width much less than 1/32 second inch (0.8mm) tend to cut into the bread, and widths greater than 1/4 inch (6-7mm) tend to permit the bread to disorientate and "float" i.e. move transversely in relation to the support rails.

Preferred or optional features of design are shown in Figures 4, 5 and 6a to 6c.

Figure 4 shows a rail 23 welded on to a transverse bar constituting a frame 21. The rail is shown in its upward position, i.e. projecting through slots 20. It is recessed at 23a to accommodate a rail 18 welded to surface 15. Attention is drawn to the stepped profile of rail 23 giving both rigidity and alignment because of thicker base 25 and also a narrower support edge because of the thinner upper portion 26.

**0152271**

Figure 5 shows a similar expedient to increase the stability of rails 18, while preserving their narrow effective upper edge. The rail is of trapezoidal cross-section 27. To minimise the length of recesses 23a, the thicker lower parts of these trapezoidal rails can be cut away at 28 where the rails 18 span slots 20 so as to leave only a relatively narrow piece of metal as the actual interruption in rails 23.

Figure 6a shows in an enlarged view an unreferenced feature of Figure 4. The corner of the rail 23 just downstream of each recess 23a, can be chamfered as shown at 29 (or rounded equivalently) to give good take up of loaves crossing the recesses. Too big a chamfer increases the effective recess length, and the chance of undesired loaf movement, but a chamfer or rounding of the correct size helps in uptake.

Figure 6b is a composite figure, showing two methods of decreasing the length of recess 23a. At 30, the "downstream" corner is shown slightly deformed out of the path. In practice, these deformation should be carried out to an extent enough to decrease the length of gap 23a but not so much as to increase the risk that the loaves will become dislodged. At 31 the "upstream" corner is shown slightly chamfered away in plan view, again to decrease the effective recess length. Either or both expedients can be used.

Figure 6c shows an alternative cross-sectional shape for rail 23, with a sloping surface 32 extending from the top edge to a position about half way down one side. This could advantageously be used with rails 18 having a recessed underside e.g. as shown in Figure 5.

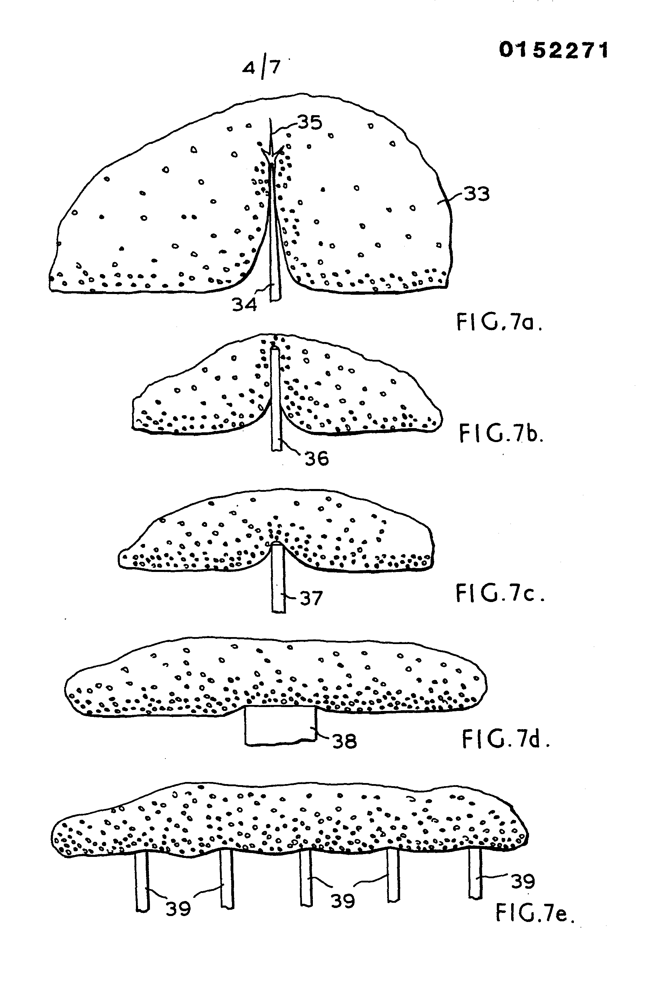

While theoretical considerations underlying this invention are not fully understood, and the following discussions should not be held in any way to be limiting of the present invention. Figures 7a to 7e illustrate certain considerations which are believed to be valuable when designing an installation.

Figure 7a shows part of the surface of a loaf of bread 33, with a crisper undersurface which merges continuously with the porous interior material. It is supported on a very thin rail 34. The weight of the loaf is such that the rail has penetrated the loaf and broken the surface at 35. The cut surfaces grip the sides of the rail. This is clearly an undesirable extreme situation, since the loaf will not readily slide.

Figure 7b shows a less extreme situation, in which the rail 36 is somewhat broader. It is deeply scored the surface, without breaking it. In all probability, it repesents an undesirable situation, unless possibly the rail is coated on each face with a non-stick surface thus allowing easier sliding.

Figure 7c shows an optimum situation. The rail 37 is broader still; it gives a significant indentation, to resist the inevitable "sideways" force exerted in a non-shortest-route sliding path, but not enough to drag on the sides of the rail or to damage the loaf.

Figure 7d shows the situation which is believed to occur with a very wide rail 38. The weight of the loaf is distributed on the rail top surface. Only a little indentation is achieved, and this is believed to be inadequate to prevent relative sideways "floating" movement.

Figure 7e shows the believed situation in which a number of rails 39, together equivalent in top surface area to the top surface area of signal rail 38, are used. The indentations in each case are small, but their are of course more of them and hence a greater resistance to sideways movement is to be expected than in the case of Figure 7d.

Thus, the design of equipment for a given purpose should take into account:

(a) the deformability of the articles to be conveyed, especially at the surface and in respect of small deformations,

(b) the dynamic friction characteristics between the articles and the construction material of the rails,

(c) the weight of the article in relation to its contacting surface,

(d) the number, and spacing, and thickness of the rails, and

(e) angles $\alpha$ and $\beta$ .

While the particular embodiments discussed above have been designed with a view to use in a bakery, the food industry generally, and other areas of use also suggest themselves. Examples are transfer of cellulosic-wrapped parcels, textiles (piece goods or bales), packages wrapped in polymer film or foam, or polymer articles themselves. Any lightweight unit article preferably with a surface at least slightly impressionable, and which needs to preserve or substantially preserve its orientation in travel through a plant or installation could be considered.

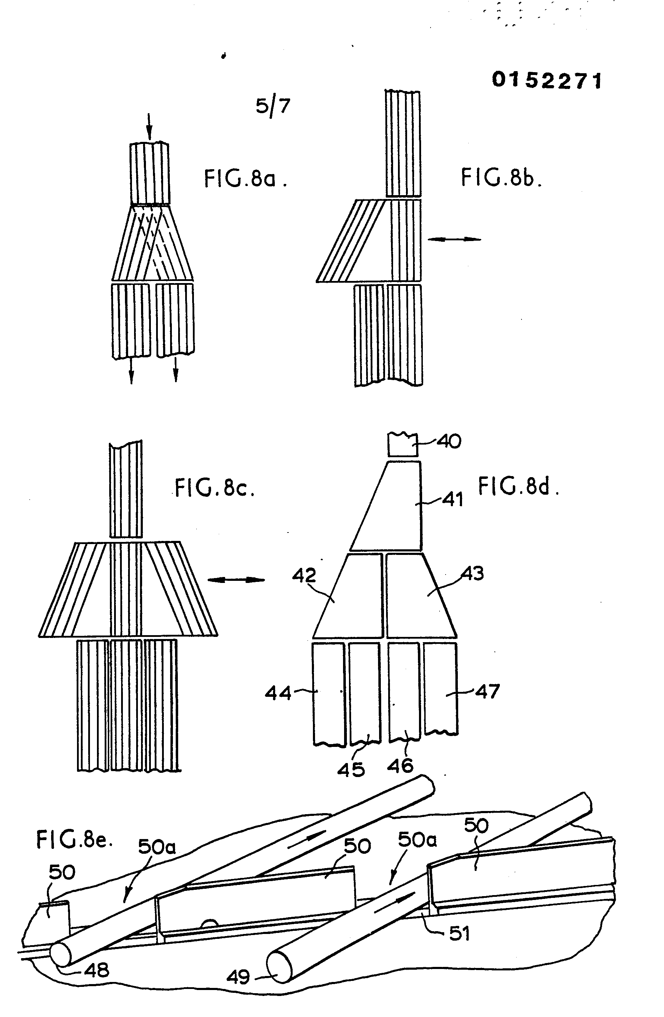

Figures 8a to 8d show variant features of plant design in diagrammatic form, using slide diverters according to the invention.

Figure 8a shows a diverter in which neither diversion direction is the "shortest path", the directions being at the same angles but to opposite sides of the central line of symmetry. This could be fabricated generally as in Figure 2. One of the lines would have interrupted rails, but the small diversion angle would minimise the detrimental effect of these.

Figure 8b shows a diverter operating on a totally different movement principle at the moment of selection. In Figure 2a and 2b, extra rails appar from below. In Figure 8b, the whole table is shifted laterally to present another set of fixed rails at a different angle.

This would not be preferred for bakery purposes, being heavy to shift and obstructive and dangerous to personnel. Also, bread in transit on the diverter would be shaken free from its rails at every movement . However, in other contexts, especially where only infrequent supply of articles is needed, e.g. where selection can be on a unit basis, it may be valuable.Figure 8c is analogous to Figure 8b, but feeds three conveyors from a single source.

In Figure 8d the support cords on the conveyor and rails on the diverters have been omitted for clarity. Figure 8d shows a feed conveyor 40, a first diverter 41 (as in

Figures 2a and 2b), two diverters 42 and 43 fed from the first diverter i.e. by simple gentle gravity feed,and four offtake belts 44, 45, 45 and 47.

Figure 8e shows a hybrid system. All the diverters shown above have received the articles on one or other sets of rails selectively positioned for that purpose. In Figure 8e part of the base of a conventional bread conveyor is shown, using parallel support cords 48, 49 for the loaves. There is also shown in a raised position a rail 15, interrupted at 50a for each cord, as an operative diverter rail. Rail 50 can be raised or lowered through a slot 51, and when raised such rails jointly provide a diverter slide as before.

Thus, while in the practice of this invention the "normal" path need not be defined by rails but could be a driven-cord path, the slide diverter should always include two or more parallel rails.

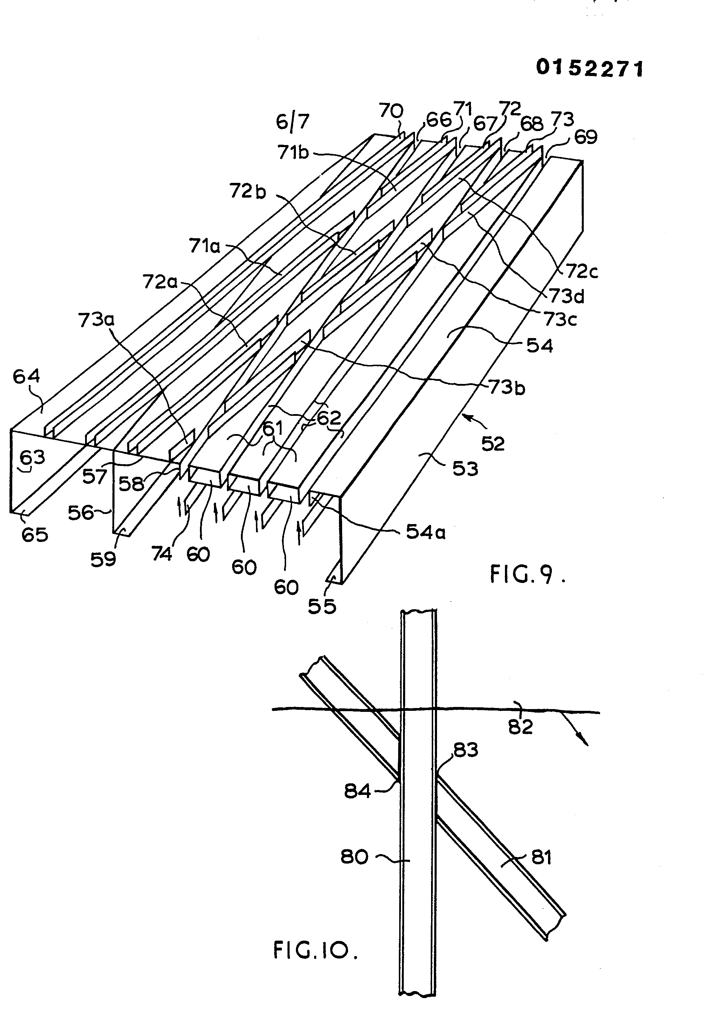

In Figure 9 the main operative features of a diverter slide are shown as a fabrication of rolled or pressed steel sections of channel or box cross-section.

A general box structure 52 is defined by assembly into the configuration shown of

(a) a side wall 53, rolled to present an inturned upper or major flange 54, downwardly lipped at 54a and an inturned lower or minor flange 55 parallel to flange 54,

(b) an opposite wall 56, with larger inturned upper flange 57 lipped downwardly at 58, and lower inturned flange 59,

(c) between the two walls 53 and 56, three box sections 60 each with top surface 61 and side walls 62. (If desired, downwardly opened channels could be used instead of box sections), and

(d) an outer wall with upper inturned flange 64 and lower inturned flange 65.

Flanges 54, 57 and 64 are coplanar. Walls 53 and 56 are parallel to one another and to the box sections 60, which are spaced from one another and from the flange lips 54a, 58, and with their top surfaces 62 coplanar with flanges 54, 57 and 58 so as to define a table structure with four parallel slots 66, 67, 68 and 69. Wall 63 converges to meet wall 56, and the structure is arranged to slope downwards from the narrow end, thereby defined, to the broader end. The actual attachments of the above components are not shown, to assist clarity of illustration of other features. Any conventional

0152271

24

interattachments, preferably at the top and bottom of the inclined table, can be used to fix and rigidify the structure.

Four channel shaped rails 70, 71, 72, 73, upwardly open, are fixed to the coplanar surface of the inclined table so as be mutually parallel and equispaced to the same extent as the defined slots 66, 67, 68 and 69. They are however parallel to the edge of outermost wall 63, which converges to wall 56. They therefore in some instances cross the slots. More specifically, rail 70 is one continuous rail; rail 71 is in two aligned but separate parts 71a and 71b, interrupted where it crosses slot 66; rail 72 is in three such parts 72a, 72b and 72c crossing slots 66 and 67; and rail 72 is in four parts 73a, 73b, 73c and 73d crossing slots 66, 67 and 68. Slot 69 isnot crossed by a rail.

Beneath the table are four movable rails 74, 75, 76 and 77. As shown they are single rails, but they could of course be channel sections, upwardly open capable of movement through lots 66, 67, 68 and 69 respectively. Again, the lifting mechanism is not shown, but could of course be similar to that shown in Figure 2b, with a pivot at or near the base of the incline.

The embodiment shown in Figure 9 is easy to fabricate by riveting, welding, etc, in a number of separate subcomponents for subsequent assembly.

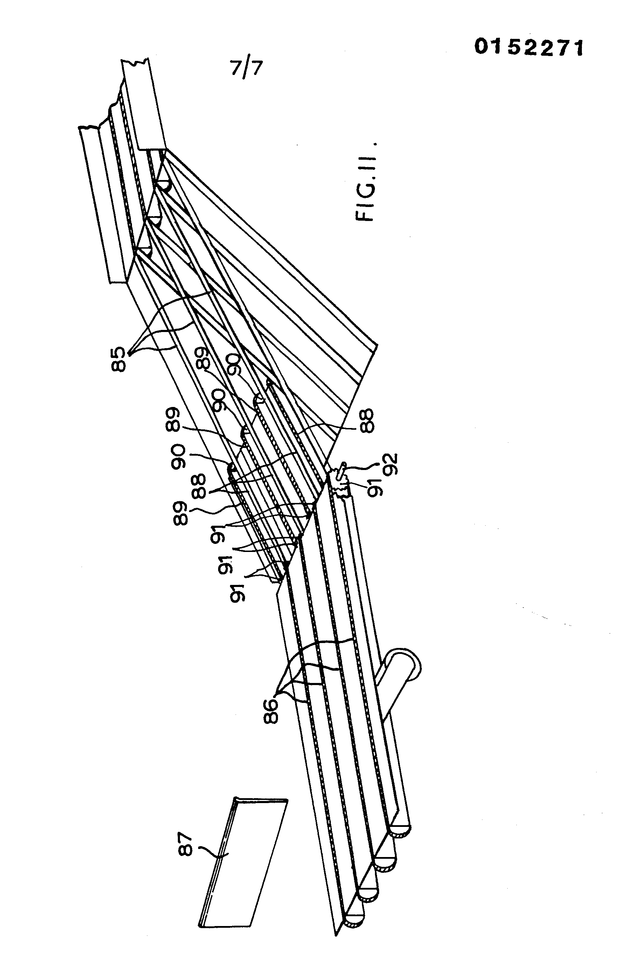

Moreover, as shown in Figure 10, if two intersecting rails 80, 81 are used it is possible for a loaf 82 sliding down diagonally as shown to encounter the first point 83 of the rails following the gap before, or as, it leaves the last point 84 of the rails before the gap, this constructing to smooth travel down the rails.

Figure 11 shows diagrammatically an improvement to equipment as shown in Figure 2b or Figure 9 to ensure that after a "back-up" in the system, all loaves subsequently start to move again at the required time.

Figure 11 shows a set of rails 85 raised to form a path down which a succession of loaves can slide. The rails allow the loaves to arrive without disturbance on a chain (or cord) conveyor 86, on the polymer chains of which they are moved along the system. If the subsequent equipment is in danger of overload, e.g. as determined by a counting photocell, it is well-known to lower a gate 87 whereby loaves accummulate on the chain conveyor. This conveyor typically continues to operate but merely slides under the line of detained loaves.

We have found that using our invention as described above it occasionally happens that the line of detained loaves exceeds the length of the chain conveyor and reaches the inclined rails to begin to accumulate on the incline. When the gate 87 is lifted, the loaves on the chains move off, but any loaf or loaves on the incline, because the coefficient of static friction is greater than the coefficient of dynamic friction tend to stick.

As long as the next loaves sliding down the incline are adequate to dislodge the static loaf or loaves, there is no marked disadvantage. However, if a line of static loaves forms, the conveyor system can begin to become inoperative.

Also, if the new arriving loaves are of a different type than a mixture will eventually arrive at the slice-and-wrap machine, which may therefore malfunction.

It is accordingly generally desirable to prevent loaves from being left on the slide.

In Figure 11, the lower portion of a set of slide rails is provided, between the rails, with polymer slide surfaces 88, and further endless chains 89 extend along these surface, through the table surface, and away around a slide arc 90 beneath the slide rails.

These chains 89 are individually driven by sprockets 91 on shaft 92, i.e. on the same shaft as the chain sprockets for the chain conveyor 86, and their top surfaces are mutually coplanar, very slightly higher than the top surfaces of the slide rails 85.

Thus in operation loaves slide on to the chains 89 and are positively driven onward, down to the table carrying chains 86. Back-up of loaves on to the slide is accordingly avoided.

CLAIMS

1.A method of materials handling in which one or more members of a spaced succession of unit articles travelling in a predetermined path is selectively diverted from the path to a second path by placing in, and at an acute angle to the said predetermined path the upper end of a slide member comprising a plurality of straight parallel support rails all terminating in a common support and slide plane,whereby diverted articles slide down the support rails while maintaining their relative orientation thereto.

2. A method as claimed in claim 1 in which the predetermined path proceeds as a drive path defined by parallel moving support members.

3. A method as claimed in claim 1 in which the predetermined path slopes down as a slide path.

4. A method as claimed in claim 3 in which the articles are directed from one slide path utilising parallel support rails with coplanar upper edges to another such rail-defined path extending both down and across the slop.

5. A method as claimed in claim 4 in which articles arriving at the lower portion of at least one of the slide paths are engaged by parallel moving support members.

6. A diverter for a conveyor installation comprising: a first set of parallel support means normally occupying a path of travel for a succession of spaced unit articles; a set of straight parallel support rails all terminating at thin upper edges in a common support plane; and means to place the set of rails into the path of travel in place of the parallel support means while the set of rails are inclined as a slide.

7. A diverter as claimed in claim 6 which comprises a first set of inclined parallel support rails all terminating at thin upper edges in a common support plane; and a second set of such rails, at an acute angle to the first set, capable of being selectively brought into intersection therewith, and with the coplanar thin rail edges above those of the first set, so as to present an alternative diverted slide path for articles such as loaves of bread supported thereon.

8. A diverter as claimed in claim 7 in which the first set of rails are lower and extend at an angle from the preceding portion of a travel path; and the second set are higher and continue the direction of the said preceding portion.

9. A diverter as claimed in claim 7 in which the second set of rails is mounted for joint pivotal movement into the selective intersecting position, the rails being individually provided with spaced gaps to accommodate the intersecting rails of the first set.

10. A diverter as claimed in claim 7, 8 or 9 having four rails each of a width within. The range 0.8 to 6mm, at a diversion angle of $10^{o}-30^{o}$ and a slide angle of $5^{o}-15^{o}$.

11. A diverter as claimed in claim 7, 8 or 9 in which at least one set of rails is formed by a plurality of upwardly open channel-shaped members.

12. A diverter as claimed in claim 7, 8 or 9 in which parallel driven support members lie between the individual rails of the lower portion of one set of rails, and extend to a height just above the rail set surface, to receive articles for engagement and onward transfer which said articles are still on the slope.

13. A conveyor installation for selective transmission of articles comprising at least one diverter as claimed in claim 6 fed from the conveyor path and selectively feeding two conveyor paths.

FIG.1a.

FIG.1b.

FIG.3.

FIG. 2a.

FIG. 2b.

FIG.4.

23a

18

23

26

15

20

21 25

20

28

27

18

15

FIG.5.

20

26

29

23

23

25

FIG.6a.

23

30

31

23

FIG.6b.

32

23

FIG.6c.

FIG.7a.

FIG.7b.

FIG.7c.

FIG.7d.

FIG.7e.

0152271

FIG.8a.

FIG.8b.

FIG.8c.

FIG.8d.

40

41

42

43

44

47

45   46

FIG.8e.

50a

50

50a

50

50

48

49

51

0152271

FIG.9.

FIG.10.

FIG.II.